(19) Europäisches Patentamt
European Patent Office
Office européen des brevets

(11) **EP 4 159 639 B1**

(12) **EUROPEAN PATENT SPECIFICATION**

(45) Date of publication and mention
of the grant of the patent:
**09.04.2025 Bulletin 2025/15**

(21) Application number: **21817327.6**

(22) Date of filing: **31.05.2021**

(51) International Patent Classification (IPC):
*B65D 65/40* (2006.01)   *C09J 11/06* (2006.01)
*C09J 175/08* (2006.01)   *C08G 18/10* (2006.01)
*C08G 18/34* (2006.01)   *C08G 18/40* (2006.01)
*C08G 18/42* (2006.01)   *C08G 18/48* (2006.01)
*C08G 18/76* (2006.01)   *B32B 7/12* (2006.01)
*C08G 18/66* (2006.01)   *C08G 18/80* (2006.01)
*B32B 27/08* (2006.01)   *B32B 27/36* (2006.01)
*B32B 15/085* (2006.01)   *B32B 15/20* (2006.01)
*C08G 18/72* (2006.01)   *C08G 18/24* (2006.01)
*C08G 18/75* (2006.01)   *B32B 27/34* (2006.01)

(52) Cooperative Patent Classification (CPC):
(C-Sets available)
**B32B 7/12; B32B 15/085; B32B 15/20;
B32B 27/08; B32B 27/304; B32B 27/32;
B32B 27/34; B32B 27/36; C08G 18/10;
C08G 18/12; C08G 18/246; C08G 18/3206;
C08G 18/4018; C08G 18/4241; C08G 18/4812;**
(Cont.)

(86) International application number:
**PCT/JP2021/020642**

(87) International publication number:
**WO 2021/246360 (09.12.2021 Gazette 2021/49)**

(54) **TWO-PACK TYPE CURABLE ADHESIVE, MULTILAYER BODY AND PACKAGE**

ZWEIKOMPONENTIGER HÄRTBARER KLEBSTOFF, MEHRSCHICHTKÖRPER UND VERPACKUNG

ADHÉSIF DURCISSABLE DE TYPE À DEUX COMPOSANTS, CORPS MULTICOUCHE ET EMBALLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.06.2020 JP 2020095916
27.10.2020 JP 2020179421**

(43) Date of publication of application:
**05.04.2023 Bulletin 2023/14**

(73) Proprietors:
• **artience Co., Ltd.
Chuo-ku
Tokyo 104-0031 (JP)**

• **Toyo-Morton, Ltd.
Chuo-ku
Tokyo 1040031 (JP)**

(72) Inventors:
• **TAKEMOTO, Noboru
Tokyo 104-0031 (JP)**
• **SATO, Yoshihiro
Tokyo 104-0031 (JP)**
• **IWASAWA, Masaki
Tokyo 104-0031 (JP)**
• **NATSUMI, Kiharu
Tokyo 104-0031 (JP)**
• **KANEKO, Chisato
Tokyo 104-0031 (JP)**

• MAEDA, Satoshi
Tokyo 104-0031 (JP)

(74) Representative: **Pfenning, Meinig & Partner mbB
Patent- und Rechtsanwälte
Theresienhöhe 11a
80339 München (DE)**

(56) References cited:
**EP-A1- 2 749 621        WO-A1-2017/217199
WO-A1-2017/221661     WO-A1-2019/045868
JP-A- 2003 292 933      JP-A- 2015 117 257
JP-A- 2017 110 103       JP-A- 2017 110 103
JP-A- 2020 066 639       JP-A- 2020 189 901**

**JP-A- H07 207 246        JP-A- S5 555 863
US-A1- 2018 002 582**

(52) Cooperative Patent Classification (CPC): (Cont.)
**C08G 18/6674; C08G 18/724; C08G 18/755;
C08G 18/7621; C08G 18/7671; C08G 18/8025;
C08G 18/8029; C09J 175/06; C09J 175/08;**
B32B 2250/24; B32B 2255/10; B32B 2255/20;
B32B 2255/26; B32B 2307/518; B32B 2553/00

C-Sets
**C08G 18/10, C08G 18/5045**

## Description

### Technical Field

The present invention relates to a two-component curable adhesive, and a laminate and a packaging material using the adhesive, and relates more particularly to an adhesive useful as a packaging material for foods, medical products, cosmetics, and the like, and a laminate and a packaging material using the adhesive.

### Background Art

Flexible packaging materials for packaging contents such as food, medical products, cosmetics, and the like utilize a laminate in which various plastic films are bonded together, or a plastic film and a metal-deposited film or a metal foil are bonded together with an adhesive layer interposed therebetween. Hydroxyl/isocyanate-based two-component curable urethane adhesives are widely used as adhesives for forming the adhesive layer. However, in recent years, from the viewpoint of cost reduction, films with a low degree of surface treatment are increasingly used, and the adhesive is required to further improve its adhesion force to plastic films, metal-deposited films, or metal foils.

Patent Literature 1 describes that the adhesive with two types of specific polyester polyols including 5 to 30% by mass of polyester polyols having a number average molecular weight of 500 to as polyol components is excellent in adhesion force and tearability. EP 2 749 621 A1 discloses 2K polyurethane adhesive compositions for making food packaging materials , wherein the adhesives are characterised by a high laminating strength, good coatability and beneficial oxygen barrier properties.

US 2018/002582 A1 and WO 2017/217199 A1 disclose also 2K polyurethane laminating adhesive compositions.

### Citation List

### Patent Literature

Patent Literature 1: Japanese Unexamined Patent Application Publication No. 2018-172492

## Summary of Invention

### Technical Problem

The adhesive described in Patent Literature 1 includes, as a main resin, a polyester polyol having a high affinity with a diluent solvent and a low solvent removability, and problems such as poor appearance and a residual solvent may thus occur at high speed coating such as 200 m/min.

Meanwhile, an adhesive obtained by combining 5 to 30% by mass of a polyester polyol having a number average molecular weight of 500 to 3,000, and a polyether urethane polyol is, despite the excellent coating properties of the polyether urethane polyol itself, problematic in that coating unevenness in high speed coating occurs due to reduced compatibility caused by the combination of resins with different skeletons.

Thus, there has been a demand for the development of an adhesive capable of achieving both excellent adhesion force and suppression of coating unevenness and a residual solvent during high speed coating.

Therefore, an object of the present invention is to provide a two-component curable adhesive that has excellent adhesion force, does not cause coating unevenness in high speed coating, and has a little residual solvent, and a laminate and a package that use the adhesive and have excellent adhesion force and a good appearance.

### Solution to Problem

As a result of extensive study, the present inventors have found that the above problem can be solved by combining a specific polyester polyol in a predetermined amount with a polyether urethane polyol, and have completed the present invention.

One embodiment of the present invention is a two-component curable adhesive including a polyol component and a polyisocyanate component, in which the polyol component includes a polyether urethane polyol (A) and a polyester polyol (B) having a number average molecular weight of 500 to 3,000, and the content of the polyester polyol (B) is 1.0 to 4.0 parts by mass based on 100 parts by mass of the polyether urethane polyol (A).

One embodiment of the present invention relates to the two-component curable adhesive, in which the polyester polyol (B) has an acid value of 10 to 50 mgKOH/g.

One embodiment of the present invention relates to the two-component curable adhesive, in which the polyether urethane polyol (A) has a weight average molecular weight of 5,000 to 45,000.

One embodiment of the present invention relates to the two-component curable adhesive, in which the polyisocyanate component includes a polyether urethane polyisocyanate that is a reaction product of an aromatic diisocyanate and a polyether polyol.

One embodiment of the present invention relates to the two-component curable adhesive, further including a hydroxy acid having two carboxy groups.

One embodiment of the present invention relates to the two-component curable adhesive in which the content of the hydroxy acid having two carboxy groups is 0.1 to 1.5 parts by mass based on 100 parts by mass of the polyether urethane polyol (A).

One embodiment of the present invention relates to the two-component curable adhesive, in which the hydroxy acid having two carboxy groups includes an aliphatic hydroxy acid having 3 to 10 carbon atoms.

One embodiment of the present invention relates to a laminate including a layer comprising the two-component curable adhesive between a first base material and a second base material.

One embodiment of the present invention relates to a package including the laminate.

**Advantageous Effects of Invention**

The present invention can provide a two-component curable adhesive that has excellent adhesion force, does not cause coating unevenness in high speed coating, and has a little residual solvent, and a laminate and a package that use the adhesive and have excellent adhesion force and a good appearance.

**Description of Embodiments**

<<Two-component curable adhesive>>

The two-component curable adhesive according to the present invention is an adhesive that cures through a chemical reaction between an isocyanate group and a hydroxyl group, and includes a polyol component having a polyether urethane polyol (A) and a polyester polyol (B) having a number average molecular weight of 500 to 3,000, and a polyisocyanate component, in which the content of the polyester polyol (B) is 1.0 to 4.0 parts by mass based on 100 parts by mass of the polyether urethane polyol (A).

Including a predetermined range of the polyester polyol (B) having a number average molecular weight of 500 to 3,000 does not reduce compatibility with the polyether urethane polyol (A), thus, when high speed coating is performed, it can provide an adhesive that suppresses coating unevenness, has a little residual solvent, and has excellent adhesion force.

The present invention will be described in detail below.

<Polyol component>

The polyol component in the present invention includes the polyether urethane polyol (A) and 1.0 to 4.0 parts by mass of the polyester polyol (B) having a number average molecular weight of 500 to 3,000 based on 100 parts by mass of the polyether urethane polyol (A). The content of the polyester polyol (B) is preferably 2.0 to 4.0 parts by mass based on 100 parts by mass of the polyether urethane polyol (A). It is preferable that the content of the polyester polyol (B) is in the range of 2.0 to 4.0 parts by mass because the adhesive strength is more excellent.

[Polyether urethane polyol (A)]

The polyether urethane polyol is not particularly limited, and is preferably a compound having a hydroxyl group and a urethane bond, the compound being a reaction product obtained by reacting a polyether polyol and a polyisocyanate under the condition of excessive hydroxyl groups. These polyether urethane polyols may be used singly or in combination of two or more thereof.

The polyether polyol may be a compound having two or more hydroxyl groups and two or more ether bonds in the molecule.

Examples of the polyether polyol include: polyalkylene glycols such as polyethylene glycol, polytrimethylene glycol, polypropylene glycol, polytetramethylene glycol, and polybutylene glycol; polyethylene glycol/polypropylene glycol block copolymers; and propylene oxide/ethylene oxide random polyethers.

In addition, oxirane compounds such as ethylene oxide, propylene oxide, butylene oxide, and tetrahydrofuran are addition polymerized to low molecular weight polyol initiators such as water, ethylene glycol, propylene glycol, trimethylolpropane, glycerin, sorbitol, and sucrose to provide an addition polymer, and this addition polymer may be used as the polyether polyol.

Examples of the addition polymer include propylene glycol propylene oxide adducts, glycerin propylene oxide adducts, sorbitol-based propylene oxide adducts, and sucrose-based propylene oxide adducts.

The number average molecular weight of the polyether polyol is preferably 100 or more and 5,000 or less, more preferably 300 or more and 2,500 or less. These polyether polyols may be used singly or in combination of two or more thereof.

The polyisocyanate may be a compound having two or more isocyanate groups.

Examples of the polyisocyanate include an aromatic polyisocyanate, an araliphatic polyisocyanate, an aliphatic polyisocyanate, or an alicyclic polyisocyanate, and the polyisocyanate may be one obtained by modifying these polyisocyanates.

These polyisocyanates may be used singly or in combination of two or more thereof.

Examples of the aromatic polyisocyanate include: aromatic diisocyanates such as diphenylmethane diisocyanate, carbodiimide-modified diphenylmethane diisocyanate, phenylene diisocyanate, tolylene diisocyanate, and naphthalene diisocyanate; and aromatic polyisocyanates such as polymethylene polyphenyl polyisocyanate.

Examples of the araliphatic polyisocyanate include: araliphatic diisocyanates such as 1,3- or 1,4-xylylene diisocyanate or a mixture thereof, and $\omega,\omega'$-diisocyanato-1,4-diethylbenzene, 1,3- or 1,4-bis(1-isocyanato-1-methylethyl) benzene or a mixture thereof.

Examples of the aliphatic polyisocyanate include aliphatic diisocyanates such as trimethylene diisocyanate, tetramethylene diisocyanate, hexamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, 2,6-diisocyanate methyl caproate, lysine diisocyanate, and a dimer acid diisocyanate.

Examples of the alicyclic polyisocyanate include alicyclic diisocyanates such as 1,4-cyclohexane diisocyanate, 1,3-cyclohexane diisocyanate, isophorone diisocyanate, 4,4'-methylenebis(cyclohexyl isocyanate), methyl 2,4-cyclohexane diisocyanate, methyl 2,6-cyclohexane diisocyanate, 1,4-bis(isocyanatomethyl)cyclohexane, 1,3-bis(isocyanatomethyl)cyclohexane, and norbornene diisocyanate.

Examples of the modified polyisocyanate include an allophanate-type modified product, an isocyanurate-type modified product, a biuret-type modified product, and an adduct-type modified product.

The polyether urethane polyol (A) is preferably a reaction product of a bifunctional or trifunctional polyalkylene glycol having a number average molecular weight of 100 to 5,000 and an aromatic diisocyanate.

In addition, from the viewpoint of achieving both adhesive strength and coating suitability, the weight average molecular weight of the polyether urethane polyol (A) is preferably 5,000 or more, more preferably 15,000 or more, and preferably 45,000 or less, more preferably 35,000 or less.

The polyether urethane polyol (A) in the present invention may be modified, or may be a polyether urethane polyol reacted with an acid anhydride to introduce a carboxyl group.

Examples of the acid anhydride include pyromellitic anhydride, mellitic anhydride, trimellitic anhydride, and a trimellitic acid ester anhydride. Examples of the trimellitic acid ester anhydride include ester compounds obtained by subjecting alkylene glycols or alkanetriols, having 2 to 30 carbon atoms to an esterification reaction with trimellitic anhydride. More specific examples of the trimellitic acid ester anhydride include ethylene glycol bis-anhydro trimellitate and propylene glycol bis-anhydro trimellitate.

[Polyester polyol (B) having a number average molecular weight of 500 to 3,000]

The polyester polyol (B) can be selected from known polyester polyols having a number average molecular weight of 500 to 3,000, and these may be used singly or in combination of two or more thereof.

Examples of the polyester polyol (B) include a polyester polyol obtained by reacting a carboxyl group component and a hydroxyl group component; and a polyester polyol obtained by ring-opening polymerization of lactones such as polycaprolactone, polyvalerolactone, and poly($\beta$-methyl-$\gamma$-valerolactone).

Examples of the carboxyl group component include: dibasic acids such as terephthalic acid, isophthalic acid, naphthalenedicarboxylic acid, phthalic anhydride, adipic acid, azelaic acid, sebacic acid, succinic acid, glutaric acid, tetrahydrophthalic anhydride, hexahydrophthalic anhydride, maleic anhydride, and itaconic anhydride; dialkyl esters thereof; or mixtures thereof. Examples of the hydroxyl group component include: diols such as ethylene glycol, propylene glycol, diethylene glycol, dipropylene glycol, triethylene glycol, butylene glycol, neopentyl glycol, dineopentyl glycol, trimethylolpropane, glycerin, 1,6-hexanediol, 1,4-butanediol, 1,4-cyclohexanedimethanol, 3-methyl-1,5-pentanediol, 3,3'-dimethylolheptane, 1,9-nonanediol, polyoxyethylene glycol, polyoxypropylene glycol, polytetramethylene ether glycol, polyether polyol, polycarbonate polyol, polyolefin polyol, acrylic polyol, and polyurethane polyol; or mixtures thereof.

These carboxyl group components and hydroxyl group components may be used each singly, or in combination of two or more thereof.

The polyester polyol (B) may be a polyester urethane polyol reacted with a diisocyanate, or may be one reacted with an acid anhydride to introduce a carboxyl group.

Examples of the diisocyanate include 2,4-tolylene diisocyanate, 2,6-tolylene diisocyanate, xylylene diisocyanate, diphenylmethane diisocyanate, isophorone diisocyanate, 1,5-naphthalene diisocyanate, hexamethylene diisocyanate, and hydrogenated diphenylmethane diisocyanate.

Examples of the acid anhydride include pyromellitic anhydride, mellitic anhydride, trimellitic anhydride, and a trimellitic acid ester anhydride.

Examples of the trimellitic acid ester anhydride include ester compounds obtained by subjecting alkylene glycols or alkanetriols, having 2 to 30 carbon atoms to an esterification reaction with trimellitic anhydride. More specific examples of the trimellitic acid ester anhydride include ethylene glycol bis-anhydro trimellitate and propylene glycol bis-anhydro trimellitate.

It is important that the polyester polyol (B) has a number average molecular weight of 500 to 3,000, preferably 1,000 to 2,500. If the number average molecular weight is less than 500, sufficient adhesion force cannot be obtained, and if it is more than 3,000, the compatibility with polyether urethane polyol is lowered, causing coating unevenness.

The number average molecular weight and weight average molecular weight in the present description are values in terms of standard polystyrene by using GPC (gel permeation chromatography) manufactured by Showa Denko K.K. and using tetrahydrofuran as a solvent.

When the polyester polyol (B) includes a plurality of polyester polyols in order to satisfy various physical properties required for packaging materials, the number average molecular weight of the polyester polyol (B) can be obtained from the number average molecular weight and the mass ratio of each polyester polyol.

The acid value of the polyester polyol (B) is preferably 10 to 50 mgKOH/g, more preferably 10 to 40 mgKOH/g, still more preferably 20 to 30 mgKOH/g. The acid value is preferably 10 mgKOH/g or more, because the adhesion force is further improved, and it is preferably 50 mgKOH/g or less, because the pot life is excellent.

In addition, when the two-component curable adhesive according to the present invention includes a hydroxy acid having two carboxy groups, which will be described later, the acid value of the polyester polyol (B) is preferably 10 to 50 mgKOH/g. An acid value of 10 mgKOH/g or more exhibits excellent adhesion force to inks containing nitrocellulose resin as a binder component, and an acid value of 50 mgKOH/g or less exhibits excellent high speed coating suitability. In the above case, the acid value of the polyester polyol (B) is preferably 20 to 50 mgKOH/g, more preferably 20 to 30 mgKOH/g.

When the polyester polyol (B) includes a plurality of polyester polyols, the acid value of the polyester polyol (B) can be determined from the acid value and the mass ratio of each polyester polyol.

The polyester polyol (B) is preferably an acid anhydride modified product obtained by reacting a part of hydroxyl groups of a polyester polyol obtained by reacting a carboxyl group component and a hydroxyl group component with an acid anhydride. The hydroxyl group component preferably includes 30 to 70 % by mole of 1,4-butanediol in 100 moles of the total hydroxyl group component. Using such a polyester polyol can provide an adhesive composition that is excellent in adhesion force, does not cause coating unevenness in high speed coating, and has a little residual solvent.

[Other polyols]

The polyol component in the present invention can contain polyols other than the polyether urethane polyol (A) and the polyester polyol (B) as long as the effect of the present invention is not impaired.

Examples of other includable polyols include a polyester polyol or polyester urethane polyol, having a number average molecular weight of less than 500, a polyester polyol or polyester urethane polyol, having a number average molecular weight of more than 3,000, a polycarbonate polyol, a polycaprolactone polyol, a polyether polyol, a polyolefin polyol, an acrylic polyol, a silicone polyol, a castor oil-based polyol, and a fluorine-based polyol, and the above other polyol may be an acid modified product in which a part of hydroxyl groups in the polyol are acid-modified.

These other polyols may be used singly or in combination of two or more thereof.

<Polyisocyanate component>

The polyisocyanate component in the present invention may be any compound having two or more isocyanate groups, and can be selected from known polyisocyanates. Examples of the polyisocyanate component include an aromatic polyisocyanate, an araliphatic polyisocyanate, an aliphatic polyisocyanate, an alicyclic polyisocyanate, or a modified product thereof. These polyisocyanates may be used singly or in combination of two or more thereof.

The aromatic polyisocyanate, the araliphatic polyisocyanate, the aliphatic polyisocyanate, the alicyclic polyisocyanate, and the modified product thereof can be referred to the description of the polyisocyanate in the polyether urethane polyol (A).

The polyisocyanate component in the present invention is preferably a polyisocyanate component including a reaction product having isocyanate groups and urethane bonds as a modified polyisocyanate, the polyisocyanate component being obtained by reacting the above polyisocyanate component and polyol under a condition of excessive isocyanate groups.

The polyol that forms the modified polyisocyanate is not particularly limited and can be selected from known polyols. Examples of the polyol include a polyester polyol, a polyester urethane polyol, a polycarbonate polyol, a polycaprolactone polyol, a polyether polyol, a polyether urethane polyol, a polyolefin polyol, an acrylic polyol, a silicone polyol, a castor oil-based polyol, and a fluorine-based polyol.

From the viewpoint of lamination strength, the polyisocyanate component is more preferably a reaction product of the above polyisocyanate component and polyether polyol, and more preferably a polyether urethane polyisocyanate that is a reaction product of an aromatic diisocyanate and a polyether polyol.

The above aromatic diisocyanate and polyether polyol can be referred to the description of the polyisocyanate and polyether polyol in the polyether urethane polyol (A).

The weight average molecular weight of the polyisocyanate component is preferably 5,000 to 30,000.

<Solvent>

The adhesive according to the present invention can be used as a solvent-type or non-solvent-type adhesive, and may contain a solvent if necessary. The term "solvent" as used in the present description refers to a highly soluble organic solvent capable of dissolving the polyol component and the polyisocyanate component.

Examples of the highly soluble organic solvent include toluene, xylene, methylene chloride, tetrahydrofuran, methanol, ethanol, isopropyl alcohol, methyl acetate, ethyl acetate, n-butyl acetate, acetone, methyl ethyl ketone, cyclohexanone, toluol, xylol, n-hexane, and cyclohexane.

The organic solvent is preferably inert to the polyisocyanate component, and examples thereof include esters such as ethyl acetate; ketones such as methyl ethyl ketone; and aromatic hydrocarbons such as toluene and xylene.

The viscosity of the adhesive according to the present invention is preferably 100 to 10,000 mPa·s, more preferably 100 to 5,000 mPa·s at a room temperature (for example, 25°C) to 150°C. In addition, the viscosity of the adhesive according to the present invention is preferably 100 to 10,000 mPa·s, more preferably 100 to 5,000 mPa·s at a room temperature to 100°C. When the adhesive according to the present invention has a viscosity of 100 to 5,000 mPa·s at a room temperature to 100°C, it can be used as a non-solvent-type adhesive.

For example, when the viscosity of the adhesive is higher than the above range, it may be diluted with the above organic solvent. The content of the organic solvent depends on the required viscosity, and the organic solvent is typically desirable to be contained in the range of 15 to 60% by mass based on the resin.

The adhesive according to the present invention is a two-component curable urethane adhesive obtained by blending a polyol component and a polyisocyanate component. The blending amount of the polyisocyanate component in the adhesive is preferably in the range of 50 to 250% by mass, more preferably in the range of 50 to 200% by mass, and still more preferably in the range of 50 to 100% by mass, based on the polyol component.

In addition, regarding the blending ratio between the polyol component and the polyisocyanate component, the equivalent ratio of all isocyanate groups contained in the isocyanate component to all hydroxyl groups contained in the polyol component, i.e., [NCO/OH], is preferably in the range of 1.1 to 5.0, more preferably in the range of 1.3 to 2.5.

The adhesive according to the present invention preferably has an acid value of 5 mgKOH/g or less, more preferably 1 mgKOH/g or less, immediately after blending the polyol component and the polyisocyanate component.

<Other components>

The adhesive according to the present invention may contain components other than the polyol component and the polyisocyanate component in order to satisfy various physical properties required for adhesives or packaging materials. These other components may be blended with either the polyol component or the polyisocyanate component, or may be added when blending the polyol component and the polyisocyanate component. These other components may be used singly or in combination of two or more thereof.

[Hydroxy acid having two carboxy groups]

The adhesive according to the present invention can further contain a hydroxy acid having two carboxyl groups in order to increase adhesion force.

By using the polyester polyol (B) in a predetermined amount and the hydroxy acid having two carboxy groups in combination with the polyether urethane polyol (A), the following effect can be obtained. That is, the length of the bond of the polyether urethane is controlled; the acid group such as the carboxy group catches an additive; and furthermore, the hydroxy acid having two carboxyl groups acts as a bridge between the adhesive layer and the base material without being affected by the ink components, thereby exhibiting excellent adhesion force. As a result, the obtained adhesive can easily suppress deterioration in adhesive strength over time. A silane coupling agent, which will be described below, may be used as the adhesive; however, such an effect can be easily obtained without using the silane coupling agent.

The above hydroxy acid may be a compound having two carboxy groups and one or more hydroxyl groups in the molecule, and can be selected from known hydroxy acids. By using such a hydroxy acid, one carboxy group binds to the surface of the base material and the other carboxy group binds to the adhesive, forming a bridge at the interface between the adhesive layer and the base material. Furthermore, the carboxyl group catches the migrating component in the ink. As a result, the adhesion force can be further improved without being affected by the components of the ink.

Examples of the hydroxy acid with two carboxy groups include an aliphatic hydroxy acid. The aliphatic hydroxy acid is not particularly limited, and examples thereof include malic acid, tartaric acid, citric acid, isocitric acid, and isomers thereof.

The hydroxy acid in the present invention is preferably an aliphatic hydroxy acid, more preferably with 3 to 10 carbon atoms, still more preferably with 3 to 8 carbon atoms.

These hydroxy acids may be used singly or in combination of two or more thereof.

The content of the hydroxy acid is preferably 0.1 to 1.5 parts by mass, more preferably 0.1 to 1.0 parts by mass, still more preferably 0.2 to 0.8 parts by mass, based on 100 parts by mass of the polyether urethane polyol (A). The content is preferably in the range of 0.1 to 1.5 parts by mass, because both pot life and adhesive strength can be easily achieved, and high speed coatability and adhesive strength are excellent.

[Silane coupling agent]

The adhesive according to the present invention can further contain a silane coupling agent in order to improve hot water resistance. Examples of the silane coupling agent include: trialkoxysilanes having a vinyl group such as vinyltrimethoxysilane and vinyltriethoxysilane; trialkoxysilanes having an amino group such as 3-aminopropyltriethoxysilane and N-(2-aminoethyl)3-aminopropyltrimethoxysilane; and trialkoxysilanes having a glycidyl group such as 3-glycidoxypropyltrimethoxysilane, 2-(3,4-epoxycyclohexyl)ethyltrimethoxysilane, and 3-glycidoxypropyltriethoxysilane. The amount of the silane coupling agent added is preferably 0.1 to 5% by mass, more preferably 0.5 to 3% by mass, based on the solid content of the adhesive.

[Phosphorus oxyacid or derivative thereof]

The adhesive according to the present invention can further contain an oxyacid of phosphorus or a derivative thereof in order to increase acid resistance. Among phosphorus oxyacids or derivatives thereof, the phosphorus oxyacid may be one having at least one free oxyacid. Examples of the phosphorus oxyacid include: phosphoric acids such as hypophosphorous acid, phosphorous acid, orthophosphoric acid, and hypophosphoric acid; and condensed phosphoric acids such as metaphosphoric acid, pyrophosphoric acid, tripolyphosphoric acid, polyphosphoric acid, and ultraphosphoric acid. In addition, examples of derivatives of phosphorus oxyacids include those obtained by partially esterifying the above phosphorus oxyacids leaving at least one free oxyacid with alcohols. Examples of these alcohols include: aliphatic alcohols such as methanol, ethanol, ethylene glycol, glycerin; and aromatic alcohols such as phenol, xylenol, hydroquinone, catechol, and phloroglycinol. The amount of the phosphorus oxyacid or the derivative thereof added is preferably 0.01 to 10% by mass, more preferably 0.05 to 5% by mass, and still more preferably 0.10 to 1% by mass, based on the solid content of the adhesive.

[Leveling agent or antifoaming agent]

The adhesive according to the present invention may further contain a leveling agent or an antifoaming agent to improve the appearance of the laminate. Examples of the leveling agent include polyether-modified polydimethylsiloxane, polyester-modified polydimethylsiloxane, aralkyl-modified polymethylalkylsiloxane, polyester-modified hydroxyl group-containing polydimethylsiloxane, polyether ester-modified hydroxyl group-containing polydimethylsiloxane, an acrylic-based copolymer, a methacrylic-based copolymer, polyether-modified polymethylalkylsiloxane, an acrylic acid alkyl ester copolymer, a methacrylic acid alkyl ester copolymer, and lecithin.

Examples of the antifoaming agent include: a silicone resin; a silicone solution; and a copolymer of alkyl vinyl ether, alkyl acrylate, and alkyl methacrylate.

[Reaction accelerator]

The adhesive according to the present invention can further contain a reaction accelerator to promote the urethanization reaction. Examples of the reaction accelerator include: metal-based catalysts such as dibutyltin diacetate, dibutyltin dilaurate, dioctyltin dilaurate, and dibutyltin dimaleate; tertiary amines such as 1,8-diaza-bicyclo(5,4,0)undecene-7, 1,5-diazabicyclo(4,3,0)nonene-5, and 6-dibutylamino-1,8-diazabicyclo(5,4,0)undecene-7; and reactive tertiary amines such as triethanolamine.

The adhesive according to the present invention may contain various additives as long as the effect of the present invention is not impaired. Examples of the additive include inorganic fillers such as silica, alumina, mica, talc, aluminum flakes, and glass flakes, layered inorganic compounds, stabilizers (antioxidants, heat stabilizers, UV absorbers, hydrolysis inhibitors, and the like), rust inhibitors, thickeners, plasticizers, antistatic agents, lubricants, antiblocking agents, coloring agents, fillers, crystal nucleating agents, and catalysts to adjust the curing reaction.

The adhesive according to the present invention is cured under a temperature condition of 20°C to 60°C after bonding the object to be bonded together, whereby the curing reaction of the adhesive progresses to provide a cured product. The application of the adhesive should not be specified; however, it is useful as an adhesive when laminating a plurality of base materials such as films to form a laminate.

<<Laminate and package>>

The laminate according to the present invention is a laminate obtained by laminating a layer of the two-component curable adhesive according to the present invention between a first base material and a second base material. Specifically, when the two-component curable adhesive according to the present invention is a solvent type, a laminate can be obtained by applying the two-component curable adhesive to the first base material with a dry laminator, performing a drying step if necessary, attaching a second base material to the applied surface, and curing the adhesive layer by aging. When the two-component curable adhesive is a non-solvent type, a laminate can be obtained by using a non-sol laminator to heat a roll coater to typically 30°C to 90°C and using an adhesive with a blended viscosity of about 300 to 3,000 mPa·s at 40°C.

The amount of the solid content in the adhesive applied is preferably 0.5 to 6 g/m$^2$, and more preferably 1.0 to 3 g/m$^2$ for non-solvent type and 1.0 to 5 g/m$^2$ for solvent type.

A film-like base material commonly used in a packaging material is preferable as the first base material. Examples of the first base material include a PET (polyethylene terephthalate) film, a NY (nylon) film, an OPP (biaxially oriented polypropylene) film, K-coated films including polyvinylidene chloride, base films such as various vapor-deposited films including silica vapor-deposited PET or alumina vapor-deposited PET, or an aluminum foil.

A film-like base material commonly used in a packaging material is preferable as the second base material. In addition to the base materials described in the first base material, examples of the second base material include: sealant films such as a CPP (unstretched polypropylene) film, a LLDPE (linear low density polyethylene), a LDPE (low density polyethylene), and a HDPE (high density polyethylene); and their aluminum vapor-deposited or silica vapor-deposited films.

Examples of the structure of the laminate according to the present invention include OPP/CPP, OPP/aluminum vapor-deposited CPP, Nylon/CPP, NY/LLDPE, PET/CPP, PET/aluminum vapor-deposited CPP, PET/aluminum vapor-deposited PET/CPP, PET/aluminum vapor-deposited PET/LLDPE, PET/NY/CPP, alumina vapor-deposited PET/-NY/CPP, PET/aluminum/LLDPE, NY/aluminum/LLDPE, PET/aluminum/CPP, NY/aluminum/CPP, silica vapor-deposited PET/NY/LLDPE, alumina vapor-deposited PET/NY/CPP, and PET/NY/PET/NY/aluminum/CPP, and it can be appropriately selected depending on the application.

The laminate according to the present invention may further have a pattern layer. The pattern layer is a layer for forming optional desired printed patterns such as letters, numerals, patterns, graphics, symbols, and designs, and includes a solid printed layer, in order to add the beauty or displays such as decoration, display of contents, display of expiration date, display of manufacturer and seller, and other displays. The pattern layer can be formed by using conventionally known pigments and dyes, and the method for forming the pattern layer is not particularly limited.

The pattern layer is typically formed by using printing ink including a colorant such as pigment or dye.

A binder resin included in the ink is appropriately selected according to the application and base material, and examples thereof include a polyurethane resin, a polyurethane polyurea resin, a vinyl chloride-acrylate copolymer, a vinyl chloride-vinyl acetate copolymer, a chlorinated polypropylene resin, an ethylenevinyl acetate copolymer resin, a vinyl acetate resin, a polyamide resin, a nitrocellulose resin (nitrocellulose), an acrylic resin, a polyester resin, an alkyd resin, a polyvinyl chloride resin, a rosin resin, a rosin-modified maleic acid resin, a terpene resin, a phenol-modified terpene resin, a ketone resin, a cyclized rubber, a chlorinated rubber, a butyral, a petroleum resin, and a modified resin thereof.

A method for applying the printing ink is not particularly limited, and the printing ink can be applied by a gravure coating method, a flexo coating method, a roll coating method, a bar coating method, a die coating method, a curtain coating method, a spin coating method, an inkjet method, or the like. The printed layer can be formed by being allowed to stand, or if necessary, by air blowing, heating, drying under reduced pressure, irradiating with ultraviolet rays, or the like.

The pattern layer is a pattern layer having a thickness of preferably 0.1 μm or more and 10 μm or less, more preferably 1 μm or more and 5 μm or less, and still more preferably 1 μm or more and 3 μm or less.

The laminate according to the present invention can be mainly used as a packaging material (package) in the food, detergent, pharmaceutical, cosmetic, and toiletry industries. It can also be used as a secondary package for packaging a container consisting of the packaging material.

**Examples**

The present invention will be described in more detail below with reference to Examples and Comparative Examples. "Parts" and "%" in Examples and Comparative Examples mean "parts by mass" and "% by mass" unless otherwise specified.

[Acid value (AV)]

An acid value was measured by the following procedure. First, about 1 g of a sample (polyester polyol solution) was accurately weighed into a stoppered conical flask, and dissolved by adding 100 ml of a toluene/ethanol (volume ratio: toluene/ethanol = 2/1) mixed solution. A phenolphthalein test solution was added thereto as an indicator and held for 30 seconds. Thereafter, the solution was titrated with a 0.1N alcoholic potassium hydroxide solution until it turned pink. The acid value was determined by the following formula:

$$\text{Acid value (mgKOH/g)} = (5.611 \times a \times F) / S$$

wherein S: sample collection amount (g)
a: consumption of 0.1N alcoholic potassium hydroxide solution (ml)
F: titer of 0.1N alcoholic potassium hydroxide solution.

[Hydroxyl value (OHV)]

A hydroxyl value was measured by the following procedure. First, about 1 g of a sample (polyester polyol solution) was accurately weighed into a stoppered conical flask, and dissolved by adding 100 ml of a toluene/ethanol (volume ratio: toluene/ethanol = 2/1) mixed solution. Exactly 5 ml of an acetylating agent (a solution of 25 g of acetic anhydride dissolved in pyridine to a volume of 100 ml) was further added and stirred for about 1 hour. A phenolphthalein test solution was added thereto as an indicator and held for 30 seconds. Thereafter, the solution was titrated with a 0.1N alcoholic potassium hydroxide solution until it turned pink. The hydroxyl value was determined by the following formula (unit: mgKOH/g):

$$\text{Hydroxyl value (mgKOH/g)} = [((b - a) \times F \times 28.05) / S] + D$$

wherein S: sample collection amount (g)
a: consumption of 0.1N alcoholic potassium hydroxide solution (ml)
b: consumption of 0.1N alcoholic potassium hydroxide solution in blank experiment (ml)
F: titer of 0.1N alcoholic potassium hydroxide solution
D: acid value (mgKOH/g).

[Number average molecular weight (Mn) and weight average molecular weight (Mw)]

The number average molecular weight and weight average molecular weight were measured by using GPC (gel permeation chromatography) manufactured by Showa Denko K.K. with Shodex GPC LF-604 (trade name, manufactured by Shodex Co., Ltd.) as a column and GPC with an RI detector (trade name GPC-104 manufactured by Shodex Co., Ltd.), and using tetrohydrofuran as a solvent, and the values in terms of standard polystyrene were used.

[Residual solvent]

A GC-8AFID type (hydrogen flame ionization detector) gas chromatography (column: 8G26-30 (3.0 m) made of glass, filler: PEG-1500) manufactured by Shimadzu Corporation was used to measure the amount of a residual solvent. First, a laminate cut to a size of $0.2\ m^2$ was finely cut, placed in a 500 mL flask, which was sealed with silicone rubber, and heated at 80°C for 30 minutes, and the flask was removed from the oven and 1 mL of the sample was injected into the gas chromatography by using a gastight syringe. Using a previously obtained calibration curve, the amount of the residual solvent in the laminated sample was calculated, and the results were expressed in $mg/m^2$.

<<Production and evaluation 1 of two-component curable adhesive>>

<Production of polyether urethane polyol (A)>

(Synthesis Example 1) Polyether urethane polyol (A1)

8 parts of a bifunctional polypropylene glycol of having a number average molecular weight of about 2,000, 34 parts of a bifunctional polypropylene glycol having a number average molecular weight of about 400, 3 parts of trifunctional polypropylene glycol having a number average molecular weight of about 400, 8 parts of tolylene diisocyanate, and 10 parts of 4,4'-diphenylmethane diisocyanate were placed in a reaction vessel and heated at 80 to 90°C for 3 to 5 hours while stirred under a nitrogen gas stream to perform an urethanization reaction. During the urethane reaction, 0.1% of dibutyltin dilaurate (DBTDL) was added as a reaction catalyst to accelerate the reaction. After completion of the reaction, 0.3 phr of 3-glycidoxypropyltrimethoxysilane was added and diluted with ethyl acetate to provide a solution of the polyether urethane polyol (A1) adjusted to have a non-volatile content of 70%. The viscosity of the solution was 6,000 mPa·s at 25°C. The weight average molecular weight was 22,000.

(Synthesis Example 2) Polyether polyurethane polyol (A2)

8 parts of a bifunctional polypropylene glycol having a number average molecular weight of about 2,000, 34 parts of a bifunctional polypropylene glycol having a number average molecular weight of about 400, 3 parts of trifunctional polypropylene glycol having a number average molecular weight of about 400, and 15 parts of tolylene diisocyanate were placed in a reaction vessel and heated at 80 to 90°C for 3 to 5 hours while stirred under a nitrogen gas stream to perform an urethanization reaction. During the urethane reaction, 0.1% of dibutyltin dilaurate was added as a reaction catalyst to accelerate the reaction. After completion of the reaction, 0.3 phr of 3-glycidoxypropyltrimethoxysilane was added and diluted with ethyl acetate to provide a solution of the polyether urethane polyol (A2) adjusted to have a non-volatile content of 70%. The viscosity of the solution was 7,000 mPa·s at 25°C. The weight average molecular weight was 35,000.

(Synthesis Example 3) Polyether urethane polyol (A3)

8 parts of a bifunctional polypropylene glycol of having a number average molecular weight of about 2,000, 34 parts of a bifunctional polypropylene glycol having a number average molecular weight of about 400, 3 parts of trifunctional polypropylene glycol having a number average molecular weight of about 400, 8 parts of tolylene diisocyanate, and 10 parts of 4,4'-diphenylmethane diisocyanate were placed in a reaction vessel and heated at 80 to 90°C for 3 to 5 hours while stirred under a nitrogen gas stream to perform an urethanization reaction. During the urethane reaction, 0.1% of dibutyltin dilaurate was added as a reaction catalyst to accelerate the reaction, and after completion of the reaction, the resultant solution was diluted with ethyl acetate to provide a solution of the polyether urethane polyol (A3) adjusted to 70% non-volatile content. The viscosity of the solution was 6,000 mPa·s at 25°C. The weight average molecular weight was 22,000.

<Production of polyester urethane polyol>

(Synthesis Example 4) Polyester urethane polyol (X1)

335 parts of isophthalic acid, 148 parts of sebacic acid, 134 parts of adipic acid, 83 parts of ethylene glycol, 143 parts of neopentyl glycol, and 157 parts of 1,6-hexanediol were charged to perform an esterification reaction at 220 to 260°C. After distillation of the predetermined amount of water, gradual pressure reduction was performed and a deglycol reaction was performed for 5 hours at 240 to 260°C under 1.333 hPA or less to provide a polyester polyol with a number average molecular weight of 6,000, a mass-average molecular weight of 13,000, a hydroxyl value of 17 mgKOH/g, and an acid value of 0.5 mgKOH/g. Furthermore, 10 parts of isophorone diisocyanate was gradually added to the total amount of this polyester polyol, and the reaction was performed at 150°C for about 2 hours to provide a polyester urethane polyol having a number average molecular weight of 8,000, a weight average molecular weight of 20,000, a hydroxyl value of 12 mgKOH/g, and an acid value of 0.5 mgKOH/g. The obtained polyester urethane polyol was diluted with ethyl acetate to provide a solution of polyester urethane polyol (X1) having a non-volatile content of 55%. The viscosity of the solution was 800 mPa·s at 25°C.

<Production of polyester polyol (B)>

(Synthesis Example 5) Polyester polyol (B1)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, the mixed solution was heated at 20 to 30 hPa and 230 to 250°C for 6 hours to distill off a part of the glycol component, and transesterification reaction was performed to obtain a polyester polyol. 25 parts of trimellitic anhydride was added to the total amount of this polyester polyol to provide an acid-modified polyester polyol (B1) having a number average molecular weight of 500 and an acid value of 22 mgKOH/g.

(Synthesis Example 6) Polyester polyol (B2)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, the mixed solution was heated at 20 to 30 hPa and 230 to 250°C for 6 hours to distill off a part of the glycol component, and transesterification reaction was performed to obtain a polyester polyol. 30 parts of trimellitic anhydride was added to the total amount of this polyester polyol to provide an acid-modified polyester polyol (B2) having a number average molecular weight of 2,000 and an acid value of 21 mgKOH/g.

(Synthesis Example 7) Polyester polyol (B3)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, the mixed solution was heated at 20 to 30 hPa and 230 to 250°C for 6 hours to distill off a part of the glycol component, and transesterification reaction was performed to obtain a polyester polyol. 25 parts of trimellitic anhydride was added to the total amount of this polyester polyol to provide an acid-modified polyester polyol (B3) having a number average molecular weight of 3,000 and an acid value of 20mgKOH/g.

(Synthesis Example 8) Polyester polyol (B4)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, the mixed solution was heated at 20 to 30 hPa and 230 to 250°C for 6 hours to distill off a part of the glycol component, and transesterification reaction was performed to obtain a polyester polyol. 12 parts of trimellitic anhydride was added to the total amount of this polyester polyol to provide an acid-modified polyester polyol (B4) having a number average molecular weight of 2,000 and an acid value of 10mgKOH/g.

(Synthesis Example 9) Polyester polyol (B5)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, and the mixed solution was heated at 20 to 30 hPa and 230 to 250°C for 6 hours to distill off a part of the glycol component, and transesterification reaction was performed to obtain a polyester polyol. 44 parts of trimellitic anhydride was added to the total amount of this polyester polyol to provide an acid-modified polyester polyol (B5) having a number average molecular weight of 2,000 and an acid value of 35mgKOH/g.

(Synthesis Example 10) Polyester polyol (B6)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, the mixed solution was heated at 20 to 30 hPa and 230 to 250°C for 6 hours to distill off a part of the glycol component, and transesterification reaction was performed to obtain a polyester polyol. 12 parts of trimellitic anhydride was added to the total amount of this polyester polyol to provide an acid-modified polyester polyol (B6) having a number average molecular weight of 300 and an acid value of 10 mgKOH/g.

(Synthesis Example 11) Polyester polyol (B7)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, the mixed solution was heated at 20 to 30 hPa and 230 to 250°C for 6 hours to distill off a part of the glycol component, and transesterification reaction was performed to obtain a polyester polyol. 25 parts of trimellitic anhydride was added to the total amount of this polyester polyol to provide an acid-modified polyester polyol (B7) having a number average molecular weight of 4,000 and an acid value of 20mgKOH/g.

<Production of polyisocyanate>

(Synthesis Example 12) Polyisocyanate (C1)

35 parts of a bifunctional polypropylene glycol having a number average molecular weight of about 2,000, 8 parts of a bifunctional polypropylene glycol having a number average molecular weight of about 400, 2 parts of a trifunctional polypropylene glycol having a number average molecular weight of about 400, and 20 parts of 4,4'-diphenylmethane diisocyanate were charged into a reaction vessel. An urethanization reaction was performed by heating at 70 to 80°C for 4 to 7 hours while stirring under a nitrogen gas stream, and after completion of the reaction, the solution was diluted with ethyl acetate to 75% non-volatile content to provide a solution of a polyether urethane polyisocyanate (C1). The isocyanate group content of (C1) was 3.1% and the viscosity was 3,000 mPa·s at 25°C.

(Synthesis Example 13) Polyisocyanate (C2)

23 parts of a bifunctional polypropylene glycol having a number average molecular weight of about 2,000, 18 parts of a bifunctional polypropylene glycol having a number average molecular weight of about 400, 1 part of a trifunctional polypropylene glycol having a number average molecular weight of about 400, and 30 parts of 4,4'-diphenylmethane diisocyanate were charged into a reaction vessel. An urethanization reaction was performed by heating at 70 to 80°C for 4 to 7 hours while stirring under a nitrogen gas stream, and after completion of the reaction, 8 parts of a trimethylolpropane adduct of tolylene diisocyanate was mixed and the solution was diluted with ethyl acetate to a non-volatile content of 80% to provide a solution of a polyether urethane polyisocyanate (C2). The isocyanate group content of (C2) was 5.2% and the viscosity was 2,5000 mPa·s at 25°C.

(Synthesis Example 14) Polyisocyanate (C3)

A trimethylolpropane adduct of 1,3-xylylene diisocyanate (XDI) and a trimethylolpropane adduct of isophorone diisocyanate (IPDI) were blended at a solid content mass ratio of 8 : 2, and the mixture was adjusted to a non-volatile content of 60% with ethyl acetate to provide a solution of a polyisocyanate (C3). The isocyanate group content of (C3) was 9.3% and the viscosity was 150 mPa·s at 25°C.

<Production of two-component curable adhesive>

[Examples 1 to 12 and Comparative Examples 1 to 5]

The polyol component and the polyisocyanate component obtained in the above Synthesis Examples were blended in the amounts shown in Table 1 to adjust a two-component curable adhesive having a non-volatile content of 30%.

<Evaluation of two-component curable adhesive>

Using the obtained adhesive, a laminate was produced and evaluated as follows. The results are shown in Table 1.

[Preparation of laminate (1-1): OPP/printed layer/adhesive layer/VMCPP, coating speed 200 m/min]

Printing inks (Rio Alpha R39 Indigo, R631 White, manufactured by Toyo Ink Co., Ltd.) were each diluted with an ethyl acetate/IPA mixed solvent (mass ratio 70/30) to a viscosity of 16 seconds (25°C, Zahn Cup No. 3).

Each diluted printing ink was printed on a corona-treated OPP film (P-2161 (trade name) manufactured by Toyobo Co., Ltd., thickness 20 $\mu$m) in the order of indigo and white with a gravure proofreading two-color machine equipped with a solid plate having a plate depth of 35 $\mu$m. The printing speed was set to 50 m/min, and drying was performed at 50°C in each unit to provide a laminate of OPP/printed layer. The thickness of the printed layer was set to 1 $\mu$m.

On the printed layer of the obtained laminate, using a laminator, the adhesive obtained above was applied at a coating speed of 200 m/min, and dried in a drying oven (50°C-60°C-60°C triple oven, furnace length 2.5 m) to volatilize the solvent, and then the adhesive-applied surface was laminated with a 25 $\mu$m-thick VMCPP film (2703 (trade name) manufactured by Toray Advanced Film Co., Ltd., 25 $\mu$m-thick, aluminum vapor-deposited unstretched polypropylene) to provide a laminate (1-1). The solid content of the adhesive applied was set to 2.5 g/m$^2$.

[Preparation of laminate (1-2): PET/printed layer/adhesive layer/VMCPP, coating speed 150 m/min]

A laminate (1-2) was obtained in the same manner as the laminate (1-1), except that the corona-treated OPP film was changed to a corona-treated PET film (E5102 (trade name) manufactured by Toyobo Co., Ltd., thickness 12 $\mu$m), the coating speed of the adhesive was changed from 200 m/min to 150 m/min, and the drying oven was changed to a 60°C-70°C-80°C triple oven.

[Preparation of laminate (1-3): PET/printed layer/adhesive layer/VMPET, coating speed 230 m/min]

A laminate (1-3) was obtained in the same manner as the laminate (1-2), except that the VMCPP film was changed to a 12 $\mu$m thick VMPET film (Dialuster H27 (trade name) manufactured by REIKO Co., Ltd., 12 $\mu$m thick, aluminum vapor-deposited PET) and the coating speed of the adhesive was changed from 150 m/min to 230 m/min.

[Preparation of laminate (1-4): PET/printed layer/adhesive layer/VMPET, coating speed 200 m/min]

A laminate (1-4) was obtained in the same manner as the laminate (1-3), except that the coating speed of the adhesive was changed from 230 m/min to 200 m/min.

[Preparation of laminate (1-5): PET/printed layer/adhesive layer/VMPET, coating speed 150 m/min]

A laminate (1-5) was obtained in the same manner as the laminate (1-3), except that the coating speed of the adhesive was changed from 230 m/min to 150 m/min.

[Residual solvent]

The amount of residual solvent in the laminate (1-1) was measured and evaluated according to the following criteria:

A: the amount of residual solvent is less than 1.0 mg/m$^2$ (good)
B: the amount of residual solvent is 1.0 mg/m$^2$ or more and less than 2.0 mg/m$^2$ (usable)
C: the amount of residual solvent is 2.0 mg/m$^2$ or more (unusable).

[Lamination strength (between PET and VMCPP)]

The laminate (1-2) was stored at 40°C for 24 hours to cure the adhesive. A test piece with a size of 15 mm $\times$ 300 mm was cut out from the cured laminate, and a tensile tester was used to perform T-type peeling at a temperature of 20°C and a relative humidity of 65% at a peel speed of 30 cm/min, and the lamination strength (N/15 mm) between PET and VMCPP was measured. An average value of five test pieces was obtained and evaluated according to the following criteria:

A: lamination strength is 1.5 N/15 mm or more (good)
B: lamination strength is 1.0 N/15 mm or more and less than 1.5 N/15 mm (usable)
C: lamination strength is less than 1.0 N/15 mm (unusable).

[High speed coatability (PET/printed layer/adhesive layer/VMPET configuration)]

When visually observing the laminate appearance of three laminates (1-3) to (1-5) having coating speeds of 230 m/min, 200 m/min, and 150 m/min, respectively, the case where no appearance defect such as a spotted pattern occurred was designated as A, the case where the appearance defect was very slightly observed was designated as B, and the case where the appearance defect was observed was designated as C (except for the evaluation B). The results of the three laminates were integrated and evaluated according to the following criteria:

A: any of laminates are determined as A (good)
B: determined as B or C at a coating speed of 230 m/min, but determined as A at 200 m/min (usable)
C: determined as B or C at a coating speed of 200 m/min, but determined as A at 150 m/min (unusable)
D: determined as B or C at a coating speed of 150 m/min (poor).

[Table 1]

Table 1

| | | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|
| Polyether urethane polyol (A) | A1 | Mw22000 | 100 | 100 | 100 | 100 | 100 | 100 | 100 | 100 | | 100 | 100 | | 100 | 100 | 100 | 100 | |
| | A2 | Mw35000 | | | | | | | | | 100 | | | | | | | | |
| | A3 | Mw22000 | | | | | | | | | | | | 100 | | | | | |
| Polyester urethane polyol | X1 | Mw20000 | | | | | | | | | | | | | | | | | 100 |
| Polyester polyol (B) | B1 | Mn500, Acid value 22 | 2.5 | | | | | | | | | | | 2.5 | | | | | |
| | B2 | Mn2000, Acid value 21 | | 2.5 | | | | 1.5 | 2 | 3.5 | 2.5 | 2.5 | 2.5 | | 0.5 | 5 | | | 2.5 |
| | B3 | Mn3000, Acid value 20 | | | 2.5 | | | | | | | | | | | | | | |
| | B4 | Mn2000, Acid value 10 | | | | 2.5 | | | | | | | | | | | | | |
| | B5 | Mn2000, Acid value 35 | | | | | 2.5 | | | | | | | | | | | | |
| Polyester polyol | B6 | Mn300, Acid value 10 | | | | | | | | | | | | | | | | 2.5 | |
| | B7 | Mn4000, Acid value 20 | | | | | | | | | | | | | | | | | 2.5 |
| Polyisocyanate | C1 | | 50 | 50 | 50 | 50 | 50 | 50 | 50 | 50 | 50 | | | 50 | 50 | 50 | 50 | 50 | |
| | C2 | | | | | | | | | | | 100 | | | | | | | |
| | C3 | | | | | | | | | | | | 65 | | | | | | 14 |
| Additives or the like | 3-Glycidoxypropyltrimethoxysilane | | 0.3phr | 0.3phr | 0.3phr | 0.3phr | 0.3phr | 0.3phr | 0.3phr | 0.3phr | 0.3phr | 0.3phr | 0.3phr | — | 0.3phr | 0.3phr | 0.3phr | 0.3phr | 0.3phr |
| Content (parts by mass) of polyester polyol (B) based on 100 parts by mass of polyether polyurethane polyol (A) | | | 2.5 | 2.5 | 2.5 | 2.5 | 2.5 | 1.5 | 2.0 | 3.5 | 2.5 | 2.5 | 2.5 | 2.5 | 0.5 | 5.0 | — | — | — |
| Acid value after blending (mgKOH/g) | | | 0.5 | 0.5 | 0.5 | 0.2 | 0.8 | 0.3 | 0.4 | 0.7 | 0.5 | 0.4 | 0.5 | 0.5 | 0.1 | 0.9 | 0.5 | 0.5 | 0.8 |
| Evaluation | Residual solvent | | A | A | A | A | A | A | A | A | A | A | A | A | A | A | A | A | C |
| | Lamination strength (between PET and VMCPP) | | A | A | A | B | B | B | A | A | B | B | B | B | C | A | C | A | A |
| | High speed coatability (PET/printing layer/adhesive layer/VMPET) | 230 m/min | A | A | A | A | B | A | A | A | A | A | A | A | A | C | A | C | C |
| | | 200 m/min | A | A | A | A | A | A | A | A | A | A | A | A | A | C | A | C | C |
| | | 150 m/min | A | A | A | A | A | A | A | A | A | A | A | A | A | C | A | C | B |
| | | Evaluation | A | A | A | A | B | A | A | A | A | A | A | A | A | D | A | D | D |

According to Table 1, the adhesive according to the present invention including 1.0 to 4.0 parts of the polyester polyol (B) having a number average molecular weight of 500 to 3,000 based on 100 parts of polyether urethane polyol (A) is excellent in adhesion force and good in lamination appearance without coating unevenness at high speed coating of 200 m/min, and had a reduced amount of residual solvent.

In particular, when the acid value of the polyester polyol (B) was in the range of 20 to 30 mgKOH/g, the adhesion strength to the aluminum vapor-deposited film and the high speed coatability were excellent.

Furthermore, the laminate using a polyether urethane polyisocyanate, which is a reaction product of an aromatic diisocyanate and a polyether polyol, was excellent in lamination strength.

<<Production and evaluation 2 of two-component curable adhesive>>

<Production of polyether urethane polyol (A)>

(Synthesis Example Y1) Polyether urethane polyol (AY1)

A bifunctional polypropylene glycol of 12 parts having a number average molecular weight of about 2,000, 38 parts of a bifunctional polypropylene glycol having a number average molecular weight of about 400, 3 parts of dipropylene glycol, and 18 parts of tolylene diisocyanate were placed in a reaction vessel and heated at 80 to 90°C for 3 to 5 hours while stirred under a nitrogen gas stream to perform an urethanization reaction. During the urethane reaction, 0.1% of dibutyltin dilaurate (DBTDL) was added as a reaction catalyst to accelerate the reaction, and after completion of the reaction, the resultant solution was diluted with ethyl acetate to provide a solution of the polyether urethane polyol (AY1) adjusted to 75% non-volatile content. The solution had a viscosity of 4,500 mPa·s at 25°C and a weight average molecular weight of 11,000.

(Synthesis Example Y2) Polyether urethane polyol (AY2)

A bifunctional polypropylene glycol of 8 parts having a number average molecular weight of about 2,000, 34 parts of a bifunctional polypropylene glycol having a number average molecular weight of about 400, 3 parts of trifunctional polypropylene glycol having a number average molecular weight of about 400, 8 parts of tolylene diisocyanate, and 10 parts of 4,4'-diphenylmethane diisocyanate were placed in a reaction vessel and heated at 80 to 90°C for 3 to 5 hours while stirred under a nitrogen gas stream to perform an urethanization reaction. During the urethane reaction, 0.1% of dibutyltin dilaurate was added as a reaction catalyst to accelerate the reaction, and after completion of the reaction, the resultant solution was diluted with ethyl acetate to provide a solution of the polyether urethane polyol (AY2) adjusted to 70% non-volatile content. The solution had a viscosity of 6,000 mPa·s at 25°C and a weight average molecular weight of 22,000.

(Synthesis Example Y3) Polyether polyurethane polyol (AY3)

A bifunctional polypropylene glycol of 8 parts having a number average molecular weight of about 2,000, 36 parts of a bifunctional polypropylene glycol having a number average molecular weight of about 400, 7 parts of trifunctional polypropylene glycol having a number average molecular weight of about 400, and 17 parts of tolylene diisocyanate were placed in a reaction vessel and heated at 80 to 90°C for 3 to 5 hours while stirred under a nitrogen gas stream to perform an urethanization reaction. During the urethane reaction, 0.1% of dibutyltin dilaurate was added as a reaction catalyst to accelerate the reaction, and after completion of the reaction, the resultant solution was diluted with ethyl acetate to provide a solution of the polyether urethane polyol (AY3) adjusted to 70% non-volatile content. The viscosity of the solution was 7,000 mPa·s at 25°C. The weight average molecular weight was 32,000.

<Production of polyester urethane polyol>

(Synthesis Example Y4) Polyester urethane polyol (X1)

In the same manner as in Synthesis Example 4, a solution of a polyester urethane polyol (X1) having a non-volatile content of 55% was obtained.

<Production of polyester polyol (B)>

(Synthesis Example Y5) Polyester polyol (BY1)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, the mixed solution was heated at 20 to 30 hPa and 230 to 250°C for 6 hours to distill off a part of the glycol component, and transesterification reaction was performed to obtain a polyester polyol. 30 parts of trimellitic anhydride was added to the total amount of this polyester polyol to provide an acid-modified polyester polyol (BY1) having a number average molecular weight of 2,000 and an acid value of 25mgKOH/g.

(Synthesis Example Y6) Polyester polyol (BY2)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, the mixed solution was heated at 20 to 30 hPa and 230 to 250°C for 6 hours to distill off a part of the glycol component, and transesterification reaction was performed to obtain a polyester polyol. 35 parts of trimellitic anhydride was added to the total amount of this polyester polyol to provide an acid-modified polyester polyol (BY2) having a number average molecular weight of 1,800 and an acid value of 30 mgKOH/g.

(Synthesis Example Y7) Polyester polyol (BY3)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, the mixed solution was heated at 20 to 30 hPa and 230 to 250°C for 6 hours to distill off a part of the glycol component, and transesterification reaction was performed to obtain a polyester polyol. 45 parts of trimellitic anhydride was added to the total amount of this polyester polyol to provide an acid-modified polyester polyol (BY3) having a number average molecular weight of 2,200 and an acid value of 40 mgKOH/g.

(Synthesis Example Y8) Polyester polyol (BY4)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, the mixed solution was heated at 20 to 30 hPa and 230 to 250°C for 6 hours to distill off a part of the glycol component, and transesterification reaction was performed to obtain a polyester polyol. 55 parts of trimellitic anhydride was added to the total amount of this polyester polyol to provide an acid-modified polyester polyol (BY4) having a number average molecular weight of 1,800 and an acid value of 50 mgKOH/g.

(Synthesis Example Y9) Polyester polyol (BY5)

325.8 parts of isophthalic acid, 286.5 parts of adipic acid, 158.2 parts of ethylene glycol, and 229.6 parts of 1,4-butanediol were charged to perform an esterification reaction at 200 to 230°C for 6 hours. After distillation of a predetermined amount of water, 0.01 parts of tetraisobutyl titanate was added, the pressure was gradually reduced, the mixed solution was heated at 20 to 30 hPa and 230 to 250°C for 6 hours to distill off a part of the glycol component, and transesterification reaction was performed to obtain a polyester polyol. 12 parts of trimellitic anhydride was added to the total amount of this polyester polyol to provide an acid-modified polyester polyol (BY5) having a number average molecular weight of 2,400 and an acid value of 10 mgKOH/g.

<Production of polyisocyanate>

(Synthesis Example Y10) Polyisocyanate (CY1)

30 parts of a bifunctional polypropylene glycol having a number average molecular weight of about 2,000, 6 parts of a bifunctional polypropylene glycol having a number average molecular weight of about 400, 1 part of trifunctional trimethylolpropane, and 20 parts of 4,4'-diphenylmethane diisocyanate were charged into a reaction vessel. An urethanization reaction was performed by heating at 70 to 80°C for 4 to 7 hours while stirring under a nitrogen gas stream, and after completion of the reaction, the solution was diluted with ethyl acetate to 75% non-volatile content to provide a solution of a polyether urethane polyisocyanate (CY1). The isocyanate group content of (CY1) was 5.4% and the viscosity was 1,500 mPa·s at 25°C.

(Synthesis Example Y11) Polyisocyanate (CY2)

23 parts of a bifunctional polypropylene glycol having a number average molecular weight of about 2,000, 18 parts of a bifunctional polypropylene glycol having a number average molecular weight of about 400, 2 parts of a trifunctional polypropylene glycol having a number average molecular weight of about 400, and 30 parts of 4,4'-diphenylmethane diisocyanate were charged into a reaction vessel. An urethanization reaction was performed by heating at 70 to 80°C for 4 to 7 hours while stirring under a nitrogen gas stream. After completion of the reaction, 7 parts of a trimethylolpropane adduct of tolylene diisocyanate were mixed and diluted with ethyl acetate to a non-volatile content of 80% to provide a solution of polyether urethane polyisocyanate (CY2). The isocyanate group content of (CY2) was 4.8% and the viscosity was 2,5000 mPa·s at 25°C.

(Synthesis Example Y12) Polyisocyanate (CY3)

35 parts of a bifunctional polypropylene glycol having a number average molecular weight of about 2,000, 8 parts of a bifunctional polypropylene glycol having a number average molecular weight of about 400, 2 parts of a trifunctional polypropylene glycol having a number average molecular weight of about 400, and 20 parts of 4,4'-diphenylmethane diisocyanate were charged into a reaction vessel. An urethanization reaction was performed by heating at 70 to 80°C for 4 to 7 hours while stirring under a nitrogen gas stream, and after completion of the reaction, the solution was diluted with ethyl acetate to 75% non-volatile content to provide a solution of a polyether urethane polyisocyanate (CY3). The isocyanate group content of (CY3) was 3.6% and the viscosity was 3,000 mPa·s at 25°C.

(Synthesis Example Y13) Polyisocyanate (CY4)

A trimethylolpropane adduct of 1,3-xylylene diisocyanate (XDI) and a trimethylolpropane adduct of isophorone diisocyanate (IPDI) were blended at a solid content ratio of 8 : 2, and the mixture was adjusted to a non-volatile content of 60% with ethyl acetate to provide a solution of a polyisocyanate (CY4). The isocyanate group content of (CY4) was 9.3% and the viscosity was 150 mPa·s at 25°C.

<Production of two-component curable adhesive>

[Examples Y1 to Y15 and Comparative Examples Y1 to Y6]

A polyol, a polyisocyanate, a hydroxy acid having two carboxyl groups, and a silane coupling agent were mixed and stirred according to the composition shown in Tables 2 and 3 to produce a two-component curable adhesive.

<Evaluation of two-component curable adhesive>

Using the obtained adhesive, the following laminates were produced and evaluated. The results are given in Table 2 and Table 3.

[Configuration of OPP/printed layer/adhesive layer/VMCPP]

(Laminate (1-1)) nitrocellulose/urethane ink, coating speed 200 m/min

Printing inks (manufactured by Toyo Ink Co., Ltd., RV-R 16 red/63 white, nitrocellulose/urethane ink) were each diluted with a solvent to a viscosity of 20 seconds (25°C., Zahn cup No. 3).
Each diluted printing ink was printed in the red-white order of red and white on a corona-treated OPP film (P-2161 (trade name) manufactured by Toyobo Co., Ltd., thickness 20 $\mu$m) with a flexo proofing 8-color machine equipped with a solid plate. The printing speed was set to 50 m/min, and drying was performed at 50°C in each unit to provide a laminate of OPP/printed layer. The thickness of the printed layer was set to 1 $\mu$m.
On the printed layer of the obtained laminate, using a laminator, the obtained adhesive was applied at a coating speed of 200 m/min, and dried in a drying oven (70°C-80°C-80°C triple oven, furnace length 2.0 m) to volatilize the solvent, and then the adhesive-applied surface was laminated with a VMCPP film (2703 (trade name) manufactured by Toray Advanced Film Co.,Ltd., 25 $\mu$m-thick, aluminum vapor-deposited unstretched polypropylene) to provide a laminate (1-1). The solid content of the adhesive applied was set to 2.5 g/m$^2$.

(Laminate (1-2)) urethane ink, coating speed 200 m/min

Printing inks (Rio Alpha R39 indigo/R631 white, urethane ink, manufactured by Toyo Ink Co., Ltd.) were each diluted with a mixed solvent to a viscosity of 16 seconds (25°C, Zahn cup No. 3). Each diluted printing ink was printed on a corona-treated OPP film (P-2161 (trade name) manufactured by Toyobo Co., Ltd., thickness 20 $\mu$m) in the indigo-white order of indigo and white with a gravure proofreading two-color machine equipped with a solid plate. The printing speed was set to 50 m/min, and drying was performed at 50°C in each unit to provide a laminate of OPP/printed layer. The thickness of the printed layer was set to 1 $\mu$m.

On the printed layer of the obtained laminate, using a laminator, the obtained adhesive was applied at a coating speed of 200 m/min, and dried in a drying oven (70°C-80°C-80°C triple oven, furnace length 2.0 m) to volatilize the solvent, and then the adhesive-applied surface was laminated with a VMCPP film (2703 manufactured by Toray Advanced Film Co., Ltd., 25 $\mu$m-thick, aluminum vapor-deposited unstretched polypropylene) to provide a laminate (1-2). The solid content of the adhesive applied was set to 2.5 g/m$^2$.

(Laminate (1-3)) nitrocellulose/urethane ink, coating speed 150 m/min

A laminate (1-3) was obtained in the same manner as the laminate (1-1), except that the coating speed of the adhesive was changed from 200 m/min to 150 m/min.

(Laminate (1-4)) nitrocellulose/urethane ink, coating speed 230 m/min

A laminate (1-4) was obtained in the same manner as the laminate (1-1), except that the coating speed of the adhesive was changed from 200 m/min to 230 m/min.

[Configuration of PET/printed layer/adhesive layer/aluminum/adhesive layer/LLDPE]

(Laminate (2-1)) nitrocellulose/urethane ink, coating speed 150 m/min

A laminate (2-1) was obtained in the same manner as the laminate (1-1), except that the corona-treated OPP film was changed to a corona-treated PET film (E5102 (trade name) manufactured by Toyobo Co., Ltd., thickness 12 $\mu$m), and aluminum foil (manufactured by Toyo Aluminium K. K., thickness 7 $\mu$m) and LLDPE film (Tocello TUX-FCD manufactured by Mitsui Chemicals, Inc., thickness 100 $\mu$m) were laminated on a printed layer using the obtained adhesive in a drying oven (70°C-80°C-90°C triple oven) at a coating speed of 150 m/min.

(Laminate (2-2)) urethane ink, coating speed 150 m/min

A laminate (2-2) was obtained in the same manner as the laminate (1-2), except that the corona-treated OPP film was changed to a corona-treated PET film (E5102 (trade name) manufactured by Toyobo Co., Ltd., thickness 12 $\mu$m), and aluminum foil (manufactured by Toyo Aluminium K. K., thickness 7 $\mu$m) and LLDPE film (Tocello TUX-FCD manufactured by Mitsui Chemicals, Inc., thickness 100 $\mu$m) were laminated on a printed layer using the obtained adhesive in a drying oven (70°C-80°C-90°C triple oven) at a coating speed of 150 m/min.

[Adhesive strength between OPP and VMCPP (at initial stage)]

The laminates (1-1) and (1-2) were stored at 40°C for 24 hours to cure the adhesive. A test piece with a size of 15 mm $\times$ 300 mm was cut out from the cured laminate, and a tensile tester was used to perform T-type peeling at a temperature of 20°C and a relative humidity of 65% at a peel speed of 30 cm/min, and the adhesive strength (N/15 mm) between OPP and VMCPP was measured. An average value of five test pieces was obtained and evaluated according to the following criteria:

    A: adhesive strength is 1.5 N/15 mm or more (good)
    B: adhesive strength is 1.0 N/15 mm or more and less than 1.5 N/15 mm (usable)
    C: adhesive strength is less than 1.0 N/15 mm (unusable).

[Adhesive strength between OPP and VMCPP (at aging stage)]

The laminates (1-1) and (1-2) were stored at 40°C for 24 hours to cure the adhesive, and then they were further stored in an environment of 40°C and humidity of 70% for one month. Using the laminate after storage, the adhesive strength was measured in the same manner as [Adhesive strength between OPP and VMCPP (at initial stage)], the average value of five test pieces was obtained, and evaluated according to the following criteria:

A: adhesive strength is 1.5 N/15 mm or more (good)
B: adhesive strength is 1.0 N/15 mm or more and less than 1.5 N/15 mm (usable)
C: adhesive strength is less than 1.0 N/15 mm (unusable).

[Adhesive strength between PET, AL, and LLDPE (at initial stage)]

The laminates (2-1) and (2-2) were stored at 40°C for 48 hours to cure the adhesive. A test piece with a size of 15 mm × 300 mm was cut out from the cured laminate, and a tensile tester was used to perform T-type peeling at a temperature of 20°C and a relative humidity of 65% at a peel speed of 30 cm/min, and the adhesive strength (N/15 mm) between PET and VMCPP was measured. An average value of five test pieces was obtained and evaluated according to the following criteria:

A: adhesive strength is 3.0 N/15 mm or more (good)
B: adhesive strength is 1.5 N/15 mm or more and less than 3.0 N/15 mm (usable)
C: adhesive strength is less than 1.5 N/15 mm (unusable).

[Adhesive strength between PET, AL, and LLDPE (at aging stage)]

The laminates (2-1) and (2-2) were stored at 40°C for 24 hours to cure the adhesive, and then they were further stored in an environment of 40°C and humidity of 70% for one month. Using the laminate after storage, the adhesive strength was measured in the same manner as [Adhesive strength between PET, AL, and LLDPE (at initial stage)], the average value of five test pieces was obtained, and evaluated according to the following criteria:

A: adhesive strength is 3.0 N/15 mm or more (good)
B: adhesive strength is 1.5 N/15 mm or more and less than 3.0 N/15 mm (usable)
C: adhesive strength is less than 1.5 N/15 mm (unusable).

[Residual solvent]

The amount of residual solvent in the laminates (1-1) and (1-2) was measured and evaluated according to the following criteria:

A: the amount of residual solvent is less than 2.0 mg/m$^2$ (good)
B: the amount of residual solvent is 2.0 mg/m$^2$ or more and less than 3.0 mg/m$^2$ (usable)
C: the amount of residual solvent is 3.0 mg/m$^2$ or more (unusable).

[High speed coatability]

The three laminates (1-1), (1-3), and (1-4) with different coating speeds were visually observed for the appearance of each laminate, and the case where no appearance defect such as a spotted pattern occurred was designated as A, the case where the appearance defect was very slightly observed was designated as B, and the case where the appearance defect was observed was designated as C (except for the evaluation B). The results of the three laminates were integrated and evaluated according to the following criteria:

A: determined as A at a coating speed of 230 m/min (good)
B: determined as B or C at a coating speed of 230 m/min, but determined as A at 200 m/min (usable)
C: determined as B or C at a coating speed of 200 m/min (unusable).

[Table 2]

Table 2

| | | | Example Y1 | Example Y2 | Example Y3 | Example Y4 | Example Y5 | Example Y6 | Example Y7 | Example Y8 | Example Y9 | Example Y10 | Example Y11 | Example Y12 | Example Y13 | Example Y14 | Example Y15 |
|---|---|---|---|---|---|---|---|---|---|---|---|---|---|---|---|---|---|
| Polyether urethane polyol (A) | AY1 | Mw 11000 | 100 | 100 | 100 | 100 | 100 | 100 | 100 | 100 | | | 100 | 100 | 100 | 100 | 100 |
| | AY2 | Mw 22000 | | | | | | | | | 100 | | | | | | |
| | AY3 | Mw 32000 | | | | | | | | | | 100 | | | | | |
| Polyester polyol (B) | BY1 | Mn 2000, Acid value 25 | 2 | | | | | 1 | 2 | 2 | 2 | 2 | 2 | 2 | 2 | 2 | 2 |
| | BY2 | Mn 1800, Acid value 30 | | 2 | | | | | | | | | | | | | |
| | BY3 | Mn 2200, Acid value 40 | | | 2 | | | | | | | | | | | | |
| | BY4 | Mn 1800, Acid value 50 | | | | 2 | | | | | | | | | | | |
| | BY5 | Mn 2400, Acid value 10 | | | | | 2 | | | | | | | | | | |
| Polyisocyanate | CY1 | | 100 | 100 | 100 | 100 | 100 | 100 | | | 100 | 100 | 100 | 100 | 100 | 100 | 100 |
| | CY2 | | | | | | | | 100 | | | | | | | | |
| | CY3 | | | | | | | | | 100 | | | | | | | |
| Hydroxy acid with two carboxy groups | Malic acid | | 0.2 | 0.2 | 0.2 | 0.2 | 0.2 | 0.2 | 0.2 | 0.2 | 0.2 | 0.2 | 0.1 | 0.5 | 1.0 | 1.2 | |
| | Tartaric acid | | | | | | | | | | | | | | | | 0.2 |
| Content (parts by mass) of polyester polyol based on 100 parts by mass of polyether urethane polyol | | | 2 | 2 | 2 | 2 | 2 | 1 | 2 | 2 | 2 | 2 | 2 | 2 | 2 | 2 | 2 |
| Acid value after blending (mgKOH/g) | | | 0.25 | 0.30 | 0.40 | 0.50 | 0.10 | 0.12 | 0.25 | 0.25 | 0.25 | 0.25 | 0.25 | 0.25 | 0.25 | 0.25 | 0.25 |
| Adhesive strength (OPP/VMCPP) | Laminate (1-1) nitrocellulose urethane ink | Initial stage | A | A | A | A | A | A | A | A | A | A | A | A | A | A | A |
| | | Aging stage | A | A | A | A | B | B | A | A | A | A | B | A | A | B | B |
| | Laminate (1-2) urethane ink | Initial stage | A | A | A | A | A | A | A | A | A | A | A | A | A | A | A |
| | | Aging stage | A | A | A | A | B | B | A | A | A | A | B | A | A | A | A |
| Adhesive strength (PET/AL/LLDPE) | Laminate (2-1) nitrocellulose urethane ink | Initial stage | A | A | A | A | A | A | A | A | A | A | A | A | A | A | A |
| | | Aging stage | A | A | A | A | B | B | A | A | A | A | B | A | A | A | A |
| | Laminate (2-2) urethane ink | Initial stage | A | A | A | A | A | A | A | A | A | A | A | A | A | A | A |
| | | Aging stage | A | A | A | A | B | B | A | A | A | A | B | A | A | A | A |
| Residual solvent (OPP/VMCPP) | Laminate (1-1) nitrocellulose urethane ink | | A | A | A | A | A | A | A | A | A | A | A | A | A | A | A |
| | Laminate (1-2) urethane ink | | A | A | A | A | A | A | A | A | A | A | A | A | A | A | A |
| High speed coatability (OPP/VMCPP) | Laminate (1-3) 150 m/min | | A | A | A | A | A | A | A | A | A | A | A | A | A | A | A |
| | Laminate (1-1) 200 m/min | | A | A | A | A | A | A | A | A | A | A | A | A | A | A | A |
| | Laminate (1-4) 230 m/min | | A | A | A | A | A | A | A | A | A | A | A | A | B | B | A |
| | Evaluation | | A | A | A | A | A | A | A | A | A | A | A | A | B | B | A |

[Table 3]

Table 3

|  |  |  | Comparative Example Y1 | Comparative Example Y2 | Comparative Example Y3 | Comparative Example Y4 | Comparative Example Y5 | Comparative Example Y6 |
|---|---|---|---|---|---|---|---|---|
| Polyether urethane polyol (A) | AY1 | Mw 11000 | 100 |  | 100 | 100 |  |  |
|  | AY2 | Mw 22000 |  | 100 |  |  |  |  |
| Polyester urethane polyol | X1 | Mw 20000 |  |  |  |  | 100 | 100 |
| Polyester polyol (B) | BY1 | Mn 2000, Acid value 25 |  |  |  | 7 | 2 |  |
| Polyisocyanate | CY1 |  | 100 |  | 100 | 100 |  |  |
|  | CY3 |  |  | 100 |  |  |  |  |
|  | CY4 |  |  |  |  |  | 14 | 14 |
| Hydroxy acid with two carboxy groups | Malic acid |  |  |  | 0.2 | 0.2 |  |  |
| 3-Glycidoxypropyltrimethoxysilane |  |  | 0.5 | 0.5 |  |  | 0.5 | 0.5 |
| Content (parts by mass) of polyester polyol based on 100 parts by mass of polyether urethane polyol |  |  | 0 | 0 | 0 | 7 | 2 | 0 |
| Acid value after blending (mgKOH/g) |  |  | 0.0 | 0.0 | 0.0 | 0.25 | 0.25 | 0.25 |
| Adhesive strength (OPP/VMCPP) | Laminate (1-1) nitrocellulose urethane ink | Initial stage | B | C | B | A | A | A |
|  |  | Aging stage | C | C | C | B | B | B |
|  | Laminate (1-2) urethane ink | Initial stage | A | A | A | A | A | A |
|  |  | Aging stage | B | B | B | A | A | A |
| Adhesive strength (PET/AL/LLDPE) | Laminate (2-1) nitrocellulose urethane ink | Initial stage | B | B | B | A | A | A |
|  |  | Aging stage | C | C | C | B | B | B |
|  | Laminate (2-2) urethane ink | Initial stage | B | B | A | A | A | A |
|  |  | Aging stage | B | B | B | A | A | A |
| Residual solvent (OPP/VMCPP) | Laminate (1-1) nitrocellulose urethane ink |  | B | B | A | B | C | C |
|  | Laminate (1-2) urethane ink |  | A | A | A | A | B | B |
| High speed coatability (OPP/VMCPP) | Laminate (1-3) 150 m/min |  | A | A | A | A | B | B |
|  | Laminate (1-1) 200 m/min |  | A | A | A | B | C | C |
|  | Laminate (1-4) 230 m/min |  | A | A | A | C | C | C |
|  | Evaluation |  | A | A | A | C | C | C |

Table 2 indicated that the adhesive according to the present invention including a hydroxy acid having two carboxyl groups was excellent in laminate appearance at a high speed coating of 200 m/min or more, and the residual solvent was reduced. Furthermore, without using a silane coupling agent, excellent adhesive strength was exhibited when using ink containing a urethane resin or a nitrocellulose resin as a binder component.

In particular, when the polyester polyol (B) had an acid value of 20 to 50 mgKOH/g and a hydroxy acid of 0.2 to 0.8 parts, excellent adhesive strength to the aluminum vapor-deposited film and excellent high speed coatability were exhibited.

**Claims**

1. A two-component curable adhesive comprising:

a polyol component; and
a polyisocyanate component,
wherein the polyol component comprises a polyether urethane polyol (A) and a polyester polyol (B) having a number average molecular weight of 500 to 3,000, and
a content of the polyester polyol (B) is 1.0 to 4.0 parts by mass based on 100 parts by mass of the polyether urethane polyol (A).

2.  The two-component curable adhesive according to Claim 1, wherein the polyester polyol (B) has an acid value of 10 to 50 mgKOH/g.

3.  The two-component curable adhesive according to Claim 1 or 2, wherein the polyether urethane polyol (A) has a weight average molecular weight of 5,000 to 45,000.

4.  The two-component curable adhesive according to any one of Claims 1 to 3, wherein the polyisocyanate component comprises a polyether urethane polyisocyanate that is a reaction product of an aromatic diisocyanate and a polyether polyol.

5.  The two-component curable adhesive according to any one of Claims 1 to 4, further comprising a hydroxy acid having two carboxy groups.

6.  The two-component curable adhesive according to Claim 5, wherein a content of the hydroxy acid having two carboxy groups is 0.1 to 1.5 parts by mass based on 100 parts by mass of the polyether urethane polyol (A).

7.  The two-component curable adhesive according to Claim 5 or 6, wherein the hydroxy acid having two carboxy groups comprises an aliphatic hydroxy acid having 3 to 10 carbon atoms.

8.  A laminate, comprising a layer including the two-component curable adhesive according to any one of Claims 1 to 7, between a first base material and a second base material.

9.  A package comprising the laminate according to Claim 8.


**Patentansprüche**

1.  Härtbarer Zweikomponentenklebstoff, umfassend:

    eine Polyolkomponente; und
    eine Polyisocyanatkomponente,
    wobei die Polyolkomponente ein Polyetherurethanpolyol (A), und ein Polyesterpolyol (B) mit einem zahlengemittelten Molekulargewicht von 500 bis 3.000, aufweist, und
    ein Gehalt des Polyesterpolyols (B) 1,0 bis 4,0 Masseteile beträgt, bezogen auf 100 Masseteile des Polyetherurethanpolyols (A).

2.  Härtbarer Zweikomponentenklebstoff nach Anspruch 1, wobei das Polyesterpolyol (B) einen Säurewert von 10 bis 50 mg KOH/g aufweist.

3.  Härtbarer Zweikomponentenklebstoff nach Anspruch 1 oder 2, wobei das Polyetherurethanpolyol (A) ein gewichtsgemitteltes Molekulargewicht von 5.000 bis 45.000 aufweist.

4.  Härtbarer Zweikomponentenklebstoff nach einem der Ansprüche 1 bis 3, wobei die Polyisocyanatkomponente ein Polyetherurethanpolyisocyanat umfasst, das ein Reaktionsprodukt eines aromatischen Diisocyanats und eines Polyetherpolyols ist.

5.  Härtbarer Zweikomponentenklebstoff nach einem der Ansprüche 1 bis 4, ferner umfassend eine Hydroxysäure, die zwei Carboxygruppen aufweist.

6.  Härtbarer Zweikomponentenklebstoff nach Anspruch 5, wobei ein Gehalt der Hydroxysäure, die zwei Carboxygruppen aufweist, 0,1 bis 1,5 Masseteile, bezogen auf 100 Masseteile des Polyetherurethanpolyols (A), ist.

7.  Härtbarer Zweikomponentenklebstoff nach Anspruch 5 oder 6, wobei die Hydroxysäure, die zwei Carboxygruppen aufweist, eine aliphatische Hydroxysäure umfasst, die 3 bis 10 Kohlenstoffatome aufweist.

8. Laminat, umfassend eine Schicht, die den härtbaren Zweikomponentenklebstoff nach einem der Ansprüche 1 bis 7 aufweist, zwischen einem ersten Basismaterial und einem zweiten Basismaterial.

9. Packung, umfassend das Laminat nach Anspruch 8.

**Revendications**

1. Adhésif durcissable à deux composants, comprenant :

   un composant polyol ; et
   un composant polyisocyanate,
   dans lequel le composant polyol comprend un polyéther uréthane polyol (A) et un polyester polyol (B) présentant un poids moléculaire moyen en nombre de 500 à 3 000, et
   une teneur du polyster polyol (B) est de 1,0 à 4,0 parties en masse sur la base de 100 parties en masse du polyéther uréthane polyol (A).

2. Adhésif durcissable à deux composants selon la revendication 1, dans lequel le polyester polyol (B) présente un indice d'acide de 10 à 50 mg de KOH/g.

3. Adhésif durcissable à deux composants selon la revendication 1 ou 2, dans lequel le polyéther uréthane polyol (A) présente un poids moléculaire moyen en poids de 5 000 à 45 000.

4. Adhésif durcissable à deux composants selon l'une quelconque des revendications 1 à 3, dans lequel le composant polyisocyanate comprend un polyisocyanate de polyéther-uréthane qui est un produit de réaction d'un diisocyanate aromatique et d'un polyéther polyol.

5. Adhésif durcissable à deux composants selon l'une quelconque des revendications 1 à 4, comprenant en outre un hydroxyacide présentant deux groupes carboxy.

6. Adhésif durcissable de type à deux composants selon la revendication 5, dans lequel une teneur de l'hydroxyacide présentant deux groupes carboxy est de 0,1 à 1,5 partie en masse sur la base de 100 parties en masse du polyéther uréthane polyol (A).

7. Adhésif durcissable de type à deux composants selon la revendication 5 ou 6, dans lequel l'hydroxyacide présentant deux groupes carboxy comprend un hydroxyacide aliphatique présentant de 3 à 10 atomes de carbone.

8. Stratifié, comprenant une couche incluant l'adhésif durcissable à deux composants selon l'une quelconque des revendications 1 7, entre un premier matériau de base et un second matériau de base.

9. Emballage comprenant le stratifié selon la revendication 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2749621 A1
- US 2018002582 A1
- WO 2017217199 A1
- JP 2018172492 A